# Europäisches Patentamt
## European Patent Office
## Office européen des brevets

(19)

(11) Veröffentlichungsnummer: **0 012 107**
**B1**

(12) **EUROPÄISCHE PATENTSCHRIFT**

(45) Veröffentlichungstag der Patentschrift: **22.06.83**

(51) Int. Cl.³: **C 08 L 27/06, C 08 K 3/26, C 08 K 5/52**

(21) Anmeldenummer: **79810148.1**

(22) Anmeldetag: **09.11.79**

(54) **Flammgeschützte, plastifizierte PVC-Mischung.**

(30) Priorität: **15.11.78 GB 4463578**

(43) Veröffentlichungstag der Anmeldung:
**11.06.80 Patentblatt 80/12**

(45) Bekanntmachung des Hinweises auf die Patenterteilung:
**22.06.83 Patentblatt 83/25**

(84) Benannte Vertragsstaaten:
**BE DE FR GB IT NL SE**

(56) Entgegenhaltungen:
**DE - A - 2 620 092**
**DE - A - 2 743 624**

(73) Patentinhaber: **CIBA-GEIGY AG**
**Patentabteilung Postfach**
**CH-4002 Basel (CH)**

(72) Erfinder: **Davis, Boyce Ian David**
**28 Yew Tree Park Road**
**Cheadle Hulme Cheadle Cheshire (GB)**
Erfinder: **Clubley, Brian George**
**7 Green Villa Park**
**Wilmslow Cheshire (GB)**

Courier Press, Leamington Spa, England.

# 0 012 107

## Flammgeschützte, plastifizierte PVC-Mischung

Die Erfindung betrifft weichgemachtes Vinylchlorid-Polymer und Copolymer, enthaltend einen flammhemmenden Weichmacher und einen Rauchverminderer. Polyvinylchlorid (PVC) ist ein Polymer, das weit verbreitete Verwendung findet. Allgemein gilt, dass PVC gute, inhärente flammehemmende Eigenschaften hat. Ist jedoch ein biegsames PVC erforderlich, müssen Weichmacher zugegeben werden. Viele dieser Weichmacher, wie Carboxylat-Ester, sind brennbar und vermindern die flammhemmenden Eigenschaften des PVC beträchtlich. Dieser Nachteil kann bis zu einem gewissen Mass durch die Verwendung eines flammhemmenden Additivs ausgeglichen werden, wie Antimonoxid zusammen mit dem brennbaren Weichmacher. Vielfach ist es aber wirkungsvoller, einen flammhemmenden Weichmacher, insbesondere ein Tri-aryl-phosphat oder Mischungen von Tri-aryl-phosphaten zu verwenden.

Neben der Entflammbarkeit haben Kunststoffe, wie weichgemachtes PVC, einen weiteren Nachteil, nämlich den, dass sie grosse Volumina Rauch beim Brennen entwickeln. Untersuchungen von Bränden in den letzten Jahren führten zu der Meinung, dass für die Opfer von Bränden der beim Brennen von Kunststoffen entwickelte Rauch ebenso gefährlich ist wie die Entflammbarkeit.

Aufgabe der Erfindung ist es, weichgemachtes PVC zu schaffen, das wirksam flammgehindert ist durch einen Tri-aryl-phosphat-Weichmacher, zusammen mit einem Additiv, das den Rauch beim Brennen vermindert.

Es sind bereits Rauchverminderer für weichgemachtes PVC bekannt. So sind z.B. Magnesium-Verbindungen, Zink-Verbindungen (GB—A 1,490,233) und Mischungen von Magnesium- und Zinkoxiden (DE—A 2 743 624) beschrieben worden. GB—A 1,490,233 beschreibt u.a. die Verwendung von Zinkcarbonat als Rauchverminderer für weichgemachtes PVC.

Es wurde nun gefunden, dass besonders wirksame Rauchverminderer Mischungen von Magnesium-carbonat und Zink-carbonat sind. Diese Mischungen ziegen sowohl ausgeziechnete Wirksamkeit als Rauchverminderer, als auch weitere Vorteile gegenüber bisher bekannten Additiven. So verbessern sie die Flammhemmung und Hitzestabilität von mit Tri-aryl-phosphat weichgemachten Formulierungen. Ein weiterer Vorteil der erfindungsgemässen Mischungen ist der, dass sie flammgehemmte Massen ergeben, die eine gute Klarheit aufweisen.

Insbesondere wurde gefunden, dass eine Mischung von Magnesium-carbonat und Zinkcarbonat besser wirksam ist als eine äquivalente Menge Magnesium-carbonat als Rauchverminderer für Phosphat-weichgemachtes PVC. Zudem ist die rauchvermindernde Wirksamkeit einer Mischung von Magnesium-carbonat und Zink-carbonat nicht nur mindestens so gut oder besser als die einer äquivalenten Menge Zink-carbonat in Phosphat-weichgemachtem PVC, sondem die Hitzestabilität ist signifikant besser.

Die Erfindung betrifft demgemäss weichgemachtes Vinylchlorid-Polymer oder-Copolymer, enthaltend

a) eine Tri-aryl-phosphat-ester und

b) eine Mischung von Magnesium-carbonat und Zink-carbonat.

Tri-aryl-phosphat-ester sind insbesondere solche mit gleichen oder verschiedenen Arylresten, besonders gegebenenfalls alkylierte Phenyl-reste, von denen mindestens ein Phenylrest alkyliert ist durch Alkyl mit insbesondere 1-4 C-Atomen, wie Methyl, Isopropyl, sek.-Butyl oder Tert.-Butyl.

Beispiele für Tri-aryl-phosphat-ester, die verwendet werden können, sind:

Cresyl-diphenyl-phosphat

Phenyl-xylyl phosphat

Tri-tolyl-phosphat

Tri-xylyl-phosphat.

Phenyl/isopropyliertes Phenylphosphate (z.B. solche, die als Reofos 95, 65 und 50 im Handel sind und in der GB—PS 1,146,173 beschrieben sind):

Phenyl/sek.-Butyl-phenyl-phosphat

Phenyl/p-t-butyl-phenyl-phosphat,

oder Mischungen davon.

Die Phosphat-ester können in Mengen von z.B. 1—150 Teile, insbesondere 2—90 Teile (Gewicht) pro 100 Teile (Gewicht) Vinyl-chlorid-Polymer oder Copolymer verwendet werden.

Das Magnesium-carbonat und Zink-carbonat können in an sich bekannter Weise gemischt werden, z.B. in einem Trockenmischer.

Das Verhältnis von Magnesium-carbonat zu Zink-carbonat in der rauchhemmenden Mischung kann z.B. vom 100:1 bis 1:10 betragen, insbesondere 10:1 bis 1:10, vor allem 10:1 bis 1:5, besonders bevorzugt 5:1 bis 2:1, z.B. 4:1 bis 2:1.

Jedes handelsübliche Magnesium- oder Zink-carbonat kann verwendet werden, und dies kann insbesondere entweder leichtes oder schweres Carbonat sein. Falls erwünscht, kann Calcium-carbonat in der Mischung vorhanden sein. Eine bevorzugte Form von Magnesium-carbonat ist Dolomit.

Beispiele für solche rauchvermindernden Mischungen sind:

leicht basisches Magnesium-carbonat und basisches Zink-carbonat;

schwer basisches Magnesium-carbonat und basisches Zink-carbonat;

Dolomit und basisches Zink-carbonat.

2

Andere magnesium- und Zink-Verbindungen können ebenfalls zugegeben werden, wie: schwer basisches Magnesium-carbonat, Magnesium-oxid und basisches Zink-carbonat, Dolomit, Magnesium-hydroxid und basisches Zink-carbonat, leichtes basisches Magnesium-carbonat, Magnesium-oxid, basisches Zink-carbonat und Zink-oxid.

Die Mischung von Magnesium-carbonat und Zink-carbonat kann in das Vinylchlorid-Polymer in beliebiger Menge eingearbeitet werden, je nach Zweck, insbesondere in Mengen von 1—120 Teilen, z.B. 2—80 Teilen (Gewicht) pro 100 Teile (Gewicht) Harz. Falls die Dispergierbarkeit der flammhemmenden Mischung im Vinylchlorid-Polymer oder -Copolymer verbessert werden soll, kannn man sie mit einer kleinen Menge Weichmacher und/oder oberflächenaktivem Mittel behandeln, bevor sie zu dem Vinylchlorid-Polymer oder -Copolymer gegeben wird.

Demgemäss betrifft die Erfindung auch Vinylchloridpolymere, enthaltend eine Mischung von Magnesium-carbonat und Zink-carbonat, behandelt mit einer kleinen Menge Weichmacher und/oder oberflächen-aktivem Mittel. Der Weichmacher und/oder das oberflächenaktive Mittel wird dabei in solchen Mengen verwendet, dass die Pulverform erhalten bleibt, z.B. verwendet 10—50 Teile, insbesondere 20—30 Teile (Gewicht) pro 100 Teile (Gewicht) $MgCO_3/ZnCO_3$-Mischung. Diese Mischung kann dann in Vinylchlorid-Polymer oder Copolymer "pre-mix", wie ein Plastisol oder Dry-Blend, eingearbeitet werden.

Man kann aber auch zur besseren Dispergierbarkeit eine Paste aus der rauchhemmenden Mischung herstellen, wobei man z.B. eine grössere Menge Weichmacher, etwa im Verhältnis 2:1 bis 1:1 Weichmacher zur Trockenmischung, verwendet.

Weitere Methoden zur Verbesserung der Dispergierbarkeit des Rauchhemmers sind z.B. die Verwendung eines Oberflächen-Ueberzugs oder eine Aenderung der Kristallform, z.B. zu spärischen Teilchen.

Die Tri-aryl-phosphat-ester (a) und die Mischung (b) können durch übliche Methoden des Compoundierens in das PVC eingearbeitet werden.

Das erfindungsgemäss ausgerüstete PVC aber auch die Mischung aus (a) und (b) können andere herkömmliche Bestandteile enthalten, wie Hitzestabilisatoren, Lichtstabilisatoren, UV-Absorber, Antioxidanten, Füllstoffe, Pigmente, Gleitmittel, Blähmittel, Fungizide, Streckmittel, Verarbeitungsshilfsmittel, andere Flammschutzmittel und Weichmacher, Carboxylat-ester, Weichmacher und andere Rauchverminderer.

Beispiele für Hitze- und Lichtstabilisatoren sind:

1) Salze von anorganischen oder organischen Säuren enthaltend Metalle, wie Aluminium, Barium, Wismuth, Calcium, Cadmium, Kalium, Natrium, Blei, Antimon, Zinn, Strontium oder ein Metall, das in Salzform einen stabilisierenden Effekt auf PVC ausübt. Die Salze können einfache oder komplex-Salze sein.

Beispiele für anorganische Salze sind basisches Bleicarbonat und tribasisches Bleisulphat.

Geeignete organische Säuren sind z.B.:

a) aliphatische Carbonsäuren, geradkettig oder verzweigt, ungesättigte oder gesättigt, und gegebenenfalls enthaltend Hydroxyl-Substituenten oder Sauerstoff in Epoxy-gruppen. Beispiele für solche Salze sind Zink-2-äthyl-hexanoat und Barium-laurat.

b) Aromatische Mono- oder Di-carbonsäuren enthaltend beliebige Substituenten in den aromatischen Gruppen und beliebige Alkyl/Aryl-Reste.

Beispiele solcher Salze sind Cadmiun-p-tert.-butyl-benzoat, Calcium-benzoat oder Blei salicylat.

c) Als saure Stoffe, Phenole, die stabile Verbindungen (Phenate) mit Metallen gegebenenfalls in geeigneter Lösung bilden können.

Ein Beispiel für ein solches Salz ist Barium-nonyl-phenat.

2) Organo-metallische Verbindungen von Antimon oder Zinn.

Beispiele dafür sind Dialkyl-zinn-mercaptide und Dialkyl-zinn-carboxylate.

3) Organische Verbindungen, die den Abbau von PVC verhindern.

Darunter sind $\alpha$-Phenyl-indol oder Ester von Aminocrotonsäure.

Alle diese Verbindungen können allein oder als Mischungen mit anderen als Feststoffe oder Lösungen in geeigneten Lösungmitteln verwendet werden, wobei nicht alle Stoffe notwendig Stabilisatoren sind. Geeignete Kombinationen sind z.B. Calcium- und Zinkcarboxylate oder ein Barium-phenat mit dem Cadmiumsalz einer verzweigten Fettsäure oder von Barium-, Cadmium- und Zink-carboxylaten.

Zudem können Stoffe verwendet werden, die die Wirksamkeit der Stabilisatoren erhöhen, die aber nicht selbst Stabilisatoren für PVC sind. Solche Costabilisatoren sind z.B.:

a) Epoxydierte Oele und Ester, wie epoxydiertes Soyabohnenöl oder epoxydiertes Octyl-oleat.

b) Ester von phosphoriger Säure mit Substituenten wie Trialkyl, Triaryl oder Alkyl-Aryl, z.B. Triphenyl-phosphit, Tris-(nonyl-phenyl)-phosphit oder Diphenyl-isodecylphosphit.

c) Aliphatische hydrophile Verbindungen, wie Pentaerythritol, Neopentyl-glycol, Sorbitol oder Halbester von Glycerin.

d) Phenolische Verbindungen, wie 2,6-Di-tert-butyl-4-methyl-phenol oder 2,2-Bis-(4'-hydroxyphenyl)-propan.

Solche Costabilisatoren können einzeln oder zusammen mit den Hauptstabilisatoren in beliebigem Verhältnis und Kombination verwendet werden, Sie können in ihrem natürlichen Zustand, allein

# 0 012 107

oder in Mischung mit Stabilisatoren und/oder auch in Lösung mit geeigneten Lösungsmitteln verwendet werden, wobei nicht notwendig alle Komponenten PVC Stabilisatoren sind.

Beispiele für Gleitmittel sind Polyäthylen-Wachse, Ester-Wachse, Stearinsäure, Calcium-stearat, Bleistearat und Beispiele für Füllstoffe sind Calcium-carbonat, gemahlen oder gefällt, oder Ton oder Aluminium-trihydrat.

Beispiele für UV-Absorber, die das PVC stabiler gegen Licht machen, sind Benzophenone oder Benzotriazole. Beispiele für andere Flammschutzmittel sind Aluminium-trihydrat, Antimon-oxid und Organo-brom-haltige Verbindungen.

Beispiele für weitere bekannte Weichmacher sind:

a) Phthalat-ester

b) Niedrig-temperatur-Weichmacher, wie Adipat-, Sebacat- und Azelat-Ester.

c) Herkömmliche Polyester-Weichmacher, wie Poly-(1,3)-butylen-glycol-adipat), das mit einem $C_8$-Alkohol oder anderen typischen Vertretern dieser Klasse endabgesättigt ist.

d) Andere Phosphat-ester Weichmacher, wie Tri-alkyl-phosphat, z.B. Tri-octyl-phosphat und Alkyl-Aryl-phosphat, z.B. Diphenyl-decyl-phospat und Diphenyl-octyl-phosphat.

e) Aryl-ester von Alkan-sulphonsäuren.

Beispiele für Streckmittel sind halogenierte Paraffine oder aromatische Kohlenwasserstoffe.

Beispiele für andere Rauchverminderer sind andere Magnesium-Verbindungen und Mischungen mit anderen Verbindungen, wie Zink-oxid und Eisenverbindungen, z.B. Ferrocen.

Die Erfindung betrifft auch Formkörper, die aus dem erfindungsgemässen Vinylchlorid-Polymer oder -Copolymer hergestellt sind.

Die folgenden Beispiele illustrieren die Erfindung, ohne sie einzuschränken. Teil und % beziehen sich auf Gewicht.

Beispiele 1 bis 3 und Vergleichsbeispiele A und B

Folgende PVC-Mischungen wurden gemäss Tabelle 1 hergestellt, indem 10 Minuten lang bei 165°C gemahlen und bei 175°C druckgeformt. wurde.

TABELLE 1

| Additiv | Teile |
|---|---|
| PVC PEVIKON® P702 | 100 |
| Reofos® 50 | 15 |
| Cereclor® S45 | 15 |
| DiDP | 25 |
| Calibrite® | 30 |
| $TiO_2$ | 10 |
| Irgastab® BC 206 | 2 |
| Rauchverminderer | 10 |

DiDp = Di-decyl-phthalat

Die Rauchentwicklung dieser PVC-Mischung wurde mittels einer NBS Aninco Rauchdichte-Kammer bestimmt, 0,38 mm dicke Proben wurden geprüft. Die Werte für die maximale spezifische optische Dichte stammen aus drei Messungen. Niedrige Dmax-Werte bedeuten neidrige Rauchentwicklung.

Die flammhemmenden Eigenschaften des PVC wurden durch Messung des Sauerstoff-Index (Test OI ASTM 2863) bestimmt.

Die Ergebnisse ziegt Tabelle II, die zeigt, dass zusätzlich zu der hervorragenden Rauchverminderung die Flammhemmung einer Mischung von $MgCO_3$ und $ZnCO_3$ beträchtlich besser ist als die des Handelsüblichen Rauchverminderers Ongard® 2 (feste Lösung von ZnO/MgO).

4

TABELLE 2

| Beispiel | Rauchverminderer-Additiv | Rauchdichte Dmax | Sauerstoff Index (OI) |
|---|---|---|---|
| 1 | 7.7 Teile $MgCO_3$ (L) | 158 | 33.4 |
| | 2.3 Teile $ZnCO_3$ | | |
| 2 | 7.7 Teile $MgCO_3$(H) | 164 | 31.3 |
| | 2.3 Teile $ZnCO_3$ | | |
| 3 | 8.40 Teile Dolomit | 154 | 28.8. |
| | 0.85 Teile leichtes Magnesium-hydroxid | | |
| | 0.75 Teile basisches Zinkcarbonat | | |
| A | Ongard® 2 | 132 | 26.7 |
| B | Keines | 206 | 27.7 |

Beispiel 4

25 Teile Reofos® 50 werden mit 75 Teilen einer Mischung von 7.7 Teilen Magnesium-carbonat und 2.3 Teilen Zink-carbonat zu einem frei fliessenden Pulver verrührt.

Beispiele 5 und 6 und Vergleichsbeispiele C und D

Gemäss Tabelle 1 wurden PVC-Mischungen hergestellt, indem 10 Minuten bei 165°C gemahlen und bei 175°C druckgeformt wurde.

Die Rauchentwicklung des PVC wurde gemäss den Beispielen 1—3 bestimmt.

Die Hitzestabilität des PVC wurde bestimmt, indem mehrere Proben jeder Formulierung auf einer Glasplatte in einen rotierenden Ofen bei 180°C gegeben wurden, aus dem sie in Abständen von 5 oder 15 Minuten entnommen wurden, bis Schwärzung eintrat. Die Zeit bis zur Schwärzung zeigt die relativen Stabilitäten.

Die Ergebnisse zeigt Tabelle 3, aus der sich ergibt, dass die rauchvermindernde Wirkung einer Mischung von $MgCO_3$ und $ZnCO_3$ beträchtlich besser ist als die einer äquivalenten Menge $MgCO_3$ allein. Zudem ist die rauchvermindernde Wirkung einer Mischung von $MgCO_3$ und $ZnCO_3$ nicht nur vergleichbar einer äquivalenten Menge $ZnCO_3$ allein, sondern die Hitzestabilität von Phosphat-weichgemachtem PVC enthaltend eine Mischung von $MgCO_3$ und $ZnCO_3$ ist beträchtlich besser als die von Phosphat-weichgemachtem PVC enthaltend eine äquivalente Menge $ZnCO_3$ allein.

TABELLE 3

| Beispiel | Rauchverminderndes Additiv | Rauchdichte Dmax | Hitzestabilität bis zur Schwärzung (Min) |
|---|---|---|---|
| 5 | 7.7 Teile $MgCO_3$(L) | 158 | >130 |
| | 2.3 Teile $ZnCO_3$ | | |
| 6 | 8.40 Teile Dolomit | 154 | >130 |
| | 0.85 Teile leichtes Magnesium-hydroxid | | |
| | 0.75 Teile basisches Zinkcarbonat | | |
| C | $ZnCO_3$ | 154 | 20 |
| D | $MgCO_3$ (L) | 173 | >130 |

Beispiel 7 und Vergleichsbeispiele E, F und G

PVC enthaltend lediglich Reofos® 95 als Weichmacher wurde gamäss der Formulierung aus Tabelle 4 hergestellt, indem 10 Minuten bei 165°C gemahlen und bei 175°C druckgeformt wurde.

TABELLE 4

| Additiv | Teile |
|---|---|
| Breon® S125/12 | 100 |
| Reofos® 95 | 70 |
| Rauchverminderer | 10 |
| Irgastab® 17 M | 1 |

Die Rauchentwicklung des PVC wurde gemäss Beispiele 1—3 bestimmt. Die Ergebnisse zeigt Tabelle 5.

TABELLE 5

| Beispiel | Rauchverminderer Additiv | Rauchdichte Dmax |
|---|---|---|
| 7 | 8 Teile $MgCO_3$ | 339 |
| | 2 Teile $ZnCO_3$ | |
| E | 10 Teile $ZnCO_3$ | 364 |
| F | 10 Teile $MgCO_3$ | 372 |
| G | Keines | 440 |

Diese Ergebnisse zeigen, dass das erfindungsgemässe Additiv gemäss Beispiel 7 ein hervorragender Rauchverminderer ist und bessere Wirksamkeit als sowohl $ZnCO_3$ als auch $MgCO_3$ zeigt.

**Patentansprüche**

1. Weichgemachtes Vinylchlorid-Polymer oder -Copolymer (PVC) enthaltend
a) einen Triaryl-phosphat-ester und
b) eine Mischung von Magnesium-carbonat und Zink-carbonat.

2. PVC nach Anspruch 1, dadurch gekennzeichnet dass der Phosphat-ester in einer Menge von 1—150 Gew.-Teile pro 100 Gew.-Teile Vinylchlorid-Polymer oder -Copolymer enthalten ist.

3. PVC nach Anspruch 1, dadurch gekennzeichnet, dass das Verhältnis von Magnesium-carbonat zu Zink-carbonat von 100:1 bis 1:10 beträgt.

4. PVC nach Anspruch 1, dadurch gekennzeichnet, dass das Verhältnis von Magnesium-carbonat zu Zink-carbonat von 4:1 bis 2:1 beträgt.

5. PVC nach Anspruch 1, dadurch gekennzeichnet, dass die Mischung (b) in einer Menge von 1—120 Gew.-Teile pro 100 Gew.-Teile Vinylchlorid-Polymer oder -Copolymer enthalten ist.

6. PVC nach Anspruch 1, dadurch gekennzeichnet, dass die Mischung (B) eine Mischung von leicht oder schwer basischem Magnesium-carbonat und basischem Zink-carbonat ist.

7. PVC nach Anspruch 1, dadurch gekennzeichnet, dass Calcium-carbonat in der Mischung (b) enthalten ist.

8. PVC nach Anspruch 1, dadurch gekennzeichnet, dass die Mischung (b) eine Mischung von Dolomit, basischem Zink-carbonat und Magnesium-hydroxid ist.

9. PVC nach Anspruch 1, enthaltend eine Mischung von Magnesium-carbonat und Zink-carbonat behandelt mit einem Weichmacher und/oder oberflächenaktiven Mittel.

10. PVC nach Anspruch 9, dadurch gekennzeichnet, dass die Menge Weichmacher oder oberflächenaktives Mittel von 10 bis 50 Gew.-Teile pro 100 Gew.-Teile der $MgCO_3/ZnCO_3$-Mischung beträgt.

**Revendications**

1. Polymère ou copolymère du chlorure de vinyle (PCV) plastifié qui contient:
   a) un phosphate de triaryle et
   b) un mélange de carbonate de magnésium et de carbonate de zinc.

2. PCV selon la revendication 1 caractérisé en ce que l'ester phosphorique est contenu en une quantité de 1 à 150 parties en poids pour 100 parties en poids du polymère ou copolymère du chlorure de vinyle.

3. PCV selon la revendication 1 caractérisé en ce que le rapport du carbonate de magnésium au carbonate de zinc est compris entre 100:1 et 1:10.

4. PCV selon la revendication 1 caractérisé en ce que le rapport du carbonate de magnésium au carbonate de zinc est compris entre 4:1 et 2:1.

5. PCV selon la revendication 1 caractérisé en ce que le mélange (b) est contenu en une quantité de 1 à 120 parties en poids pour 100 parties en poids du polymère ou copolymère du chlorure de vinyle.

6. PCV selon la revendication 1 caractérisé en ce que le mélange (b) est un mélange de carbonate de magnésium légèrement ou très basique et de carbonate de zinc basique.

7. PCV selon la revendication 1 caractérisé en ce que le mélange (b) contient du carbonate de calcium.

8. PCV selon la revendication 1 caractérisé en ce que le mélange (b) est un mélange de dolomite, de carbonate de zinc basique et d'hydroxyde de magnésium.

9. PCV selon la revendication 1 qui contient un mélange de carbonate de magnésium et de carbonate de zinc traité par un plastifiant et/ou un agent surfactif.

10. PCV selon la revendication 9 caractérisé en ce que la quantité de plastifiant ou d'agent surfactif est comprise entre 10 et 50 parties en poids pour 100 parties en poids du mélange $MgCO_3/ZnCO_3$.

**Claims**

1. A plasticised vinyl chloride polymer or copolymer (PVC) containing
   a) a triaryl phosphate ester and
   b) a mixture of magnesium carbonate and zinc carbonate.

2. PVC according to Claim 1, in which the phosphate ester is present in an amount 1—150 parts by weight per 100 parts by weight of vinyl chloride polymer or copolymer.

3. PVC according to Claim 1, in which the ratio of magnesium carbonate to zinc carbonate is from 100:1 to 1:10.

4. PVC according to Claim 1, in which the ratio of magnesium carbonate to zinc carbonate is from 4:1 to 2:1.

5. PVC according to Claim 1, in which the mixture (b) is present in an amount of 1—120 parts by weight per 100 parts by weight of vinyl chloride polymer or copolymer.

6. PVC according to Claim 1, in which the mixture (b) is a mixture of light or heavy basic magnesium carbonate and basic zinc carbonate.

7. PVC according to Claim 1, in which calcium carbonate is present in the mixture (b).

8. PVC according to Claim 1, in which the mixture (b) is a mixture of dolomite, basic zinc carbonate and magnesium hydroxide.

9. PVC according to Claim 1, containing a mixture of magnesium carbonate and zinc carbonate treated with a plasticiser and/or surface-active agent.

10. PVC according to Claim 9, in which the amount of plasticiser or surface-active agent is from 10 to 50 parts by weight per 100 parts by weight of the $MgCO_3/ZnCO_3$ mixture.